# EUROPÄISCHE PATENTSCHRIFT

(11) **EP 3 423 909 B1**
(45) Veröffentlichungstag und Bekanntmachung des Hinweises auf die Patenterteilung: **03.11.2021**
(21) Anmeldenummer: 17716462.1
(22) Anmeldetag: 03.03.2017
(51) Int. Cl.: G05B 23/02

(54) **DATENSPEICHERVORRICHTUNG ZUM EINSATZ AN EINER NUMERISCH GESTEUERTEN WERKZEUGMASCHINE**
DATA STORAGE DEVICE FOR USE WITH A NUMERICALLY CONTROLLED MACHINE TOOL
DISPOSITIF DE STOCKAGE DE DONNÉES À METTRE EN OEUVRE SUR UNE MACHINE-OUTIL À COMMANDE NUMÉRIQUE

(30) Priorität: 03.03.2016 DE 102016203554; 13.09.2016 DE 102016217443
(43) Veröffentlichungstag der Anmeldung: 09.01.2019
(73) Patentinhaber: DECKEL MAHO Pfronten GmbH, 87459 Pfronten (DE)
(72) Erfinder: KETTEMER, Rolf, 87616 Marktoberdorf (DE); HOLZNER, Alexander, 45481 Mülheim an der Ruhr (DE); RAUSCH, Gerhard, 33378 Rheda-Wiedenbrück (DE)
(74) Vertreter: MERH-IP Matias Erny Reichl Hoffmann Patentanwälte PartG mbB
(86) Internationale Anmeldenummer: PCT/EP2017/055065
(87) Internationale Veröffentlichungsnummer: WO 2017/149145

(56) Entgegenhaltungen:
- EP-A2- 1 715 397
- EP-A2- 1 921 527
- DE-A1-102013 005 769
- RAMACHANDRAN U ET AL: "A system architecture for distributed control loop applications", 20030528; 20030528 - 20030530, 28. Mai 2003 (2003-05-28), Seiten 2-8, XP010643122,
- NIGEL HARDY ET AL: "ViSIAr -A virtual Sensor Integration Architecture", ROBOTICA, CAMBRIDGE, GB , Bd. 17 1. Januar 1999 (1999-01-01), Seiten 635-647, XP002587162, ISSN: 0263-5747 Gefunden im Internet: URL:http://cadair.aber.ac.uk/dspace/bitstr eam/2160/37/2/ViSIAr%2520-%2520Robotica.pd f [gefunden am 2010-06-15]

## Beschreibung

Die vorliegende Erfindung betrifft eine Datenspeichervorrichtung für eine numerisch gesteuerte Werkzeugmaschine, die eine Steuereinrichtung zum Steuern einer Mehrzahl von Aktoren der Werkzeugmaschine und eine Mehrzahl von Sensoren zur Ausgabe von einen Maschinenzustand der Werkzeugmaschine betreffenden Sensorsignalen an die Steuereinrichtung umfasst.

### Hintergrund

Im Stand der Technik sind numerisch gesteuerte Werkzeugmaschinen bekannt, die eine Steuereinrichtung zum Steuern einer Mehrzahl von Aktoren der Werkzeugmaschine und eine Mehrzahl von Sensoren zur Ausgabe von einen Maschinenzustand der Werkzeugmaschine betreffenden Sensorsignalen an die Steuereinrichtung umfasst.

U. Ramachandran et al. beschreiben in "A System Architecture for Distributed Control Loop Applications" Proceedings of the Ninth IEEE Workshop on Future Trends of Distributed Computing Systems 2003 (FTDCS'03), Seiten 2 bis 8, XP010643122, eine Media Broker Architektur, der Sensordaten einer Vielzahl von Sensoren zum Weiterverarbeiten zur Verfügung gestellt werden können.

NIGEL HARDY ET AL: "ViSIAr -A virtual Sensor Integration Architecture",Bd. 17, 1. Januar 1999, Seiten 635-647, XP002587162, offenbart virtuelle Sensoren zur Abstraktion physischer Sensoren und einer besseren Integration dieser in Überwachungssysteme.

EP 1 715 397 offenbart Verfahren und Systeme zur Maschinendiagnose, welche die restliche Lebenszeit von überwachten Komponenten anhand von Sensordaten berechnen.

Aus der DE 10 2013 005 769 A1 sind ein Gerät zum Anzeigen von Daten und ein Verfahren Überwachen eines Zustands einer Maschine bekannt, wobei eine Vielzahl von Sensoren den Zustand der Maschine überwacht.

Zum Auswerten bzw. Anzeigen oder Überwachen eines Maschinenzustands der Werkzeugmaschine während des Betriebs bzw. während der Bearbeitung von Werkstücken an der Werkzeugmaschine ist es bekannt, in der Steuereinrichtung der Werkzeugmaschine bzw. an die Steuereinrichtung der Werkzeugmaschine angebunden prozessorgesteuerte Speichereinheiten (sog. Datenlogger) vorzusehen, die alle verfügbaren Sensorsignale der Sensoren der Werkzeugmaschine in einzelnen Kanälen bei gleicher Sampling-Frequenz bzw. Auslesefrequenz in einem Speichermedium zu speichern, wobei die Sampling-Frequenz bzw. Auslesefrequenz jedoch abhängig ist von den typabhängigen Möglichkeiten der Steuereinrichtung (NC Steuerung und/oder PLC bzw. SPS) der Werkzeugmaschine.

Somit wird mit im Stand der Technik bekannten Datenloggern für verschiedene Werkzeugmaschinen eine ungefilterte und unangepasste Flut von puren Sensorwertdaten aller verfügbarer Sensoren gespeichert, die jeweils werkzeugmaschinenabhängig als auch steuerungsabhängig sind.

Dies führt einerseits zu großen und unübersichtlich gesammelten Datenmengen und erschwert andererseits insbesondere die Auswertung bzw. Anzeige der gesammelten Daten in werkzeugmaschinenunabhängiger und/oder steuerungsunabhängiger Art und Weise.

Im Hinblick auf die vorstehend genannten Probleme ist es eine Aufgabe der vorliegenden Erfindung, eine Datenspeichervorrichtung zum Einsatz an einer numerisch gesteuerten Werkzeugmaschine bereitzustellen, die die vorstehend genannten Probleme zu vermeiden vermag.

Insbesondere ist es eine Aufgabe der vorliegenden Erfindung, eine einfachere, übersichtlichere Speicherung von einfacher weiter zu verwertenden Sensorikdaten einer numerisch gesteuerten Werkzeugmaschine bereitzustellen, die zudem bevorzugt die Datenverarbeitungsauslastung der Steuerung der Werkzeugmaschine bei Auslesen der Sensorwerte reduziert und weiterhin bevorzugt die Menge der zu speichernden Daten bei Beibehaltung einer hohen Aussagekraft zu reduzieren vermag, und die zudem bevorzugt unabhängig von Werkzeugmaschinentyp und/oder Steuerungstyp universell einsetzbar ist.

### Zusammenfassung

Zur Lösung der vorstehend genannten Aufgabe wird erfindungsgemäß eine Datenspeichervorrichtung für eine numerisch gesteuerte Werkzeugmaschine gemäß dem unabhängigen Anspruch 1 vorgeschlagen. Abhängige Ansprüche, Systemansprüche bzw. nebengeordnete Ansprüche betreffen bevorzugte Ausführungsbeispiele der vorliegenden Erfindung.

Gemäß einem Aspekt der Erfindung wird eine Datenspeichervorrichtung für eine numerisch gesteuerte Werkzeugmaschine vorgeschlagen, wobei die Werkzeugmaschine eine Steuereinrichtung zum Steuern einer Mehrzahl von Aktoren der Werkzeugmaschine und eine Mehrzahl von Sensoren zur Ausgabe von einen Maschinenzustand der Werkzeugmaschine betreffenden Sensorsignalen an die Steuereinrichtung umfassen kann.

Die Datenspeichervorrichtung umfasst eine erste Schnittstelleneinheit zur Datenübertragung bzw. zum Bereitstellen einer Datenverbindung mit der numerischen Steuereinrichtung der Werkzeugmaschine; ein erstes Speichermedium zum Speichern von Konfigurationsdaten, die bevorzugt eine Gruppe von Sensoren der Werkzeugmaschine sowie Auslese- und/oder Verarbeitungsregeln für Sensorsignale der Gruppe von Sensoren der Werkzeugmaschine angeben; eine Ausleseeinheit zum Auslesen von Sensorsignalwerten der Sensorsignale der in den Konfigurationsdaten angegebenen Gruppe von Sensoren der Werkzeugmaschine über die erste Schnittstelleneinheit, bevorzugt auf Grundlage der der in den Konfigurationsdaten angegebenen Ausleseregeln; eine. Datenverarbeitungseinheit zur Verarbeitung der mittels der Ausleseeinheit ausgelesenen Sensorsignalwerte zu aggregierten Sensorikdaten, bevorzugt auf Grundlage der in den Konfigurationsdaten angegebenen Verarbeitungsregeln; ein zweites Speichermedium zum Speichern der von der Datenverarbeitungseinheit verarbeiteten, aggregierten Sensorikdaten; und eine zweite Schnittstelleneinheit zur Datenübertragung bzw. zum Bereitstellen einer Datenverbindung mit einer externen Datenverarbeitungseinrichtung, über die der externen Datenverarbeitungseinrichtung Zugriff auf in dem zweiten Speichermedium gespeicherte Sensorikdaten gewährbar ist.

Die verfügbaren Sensoren an der Werkzeugmaschine und die Verfügbarkeit der Sensorwerte an der Steuerung kann hierbei maschinentypisch und/oder steuerungstypisch sehr unterschiedlich ausfallen.

Hierzu sieht die Erfindung beispielhaft vor, in Konfigurationsdaten zum Auslesen und Verarbeiten der Sensorikdaten modifizierbar festzulegen, welche Sensoren an der Werkzeugmaschine verfügbar sind bzw. ausgelesen werden sollen, und wie die jeweiligen Sensorwerte ausgelesen werden (z.B. durch Festlegen vorbestimmter individueller Ausleseraten) und/oder wie die ausgelesenen Sensorwerte verarbeitet und gespeichert (Verarbeitungsregeln) werden sollen.

Auf Basis der individuell konfigurierbaren Konfigurationsdaten kann die erfindungsgemäße Datenspeichereinheit vielseitig genutzt werden und an Maschinen mit umfangreichen Sensorpaket mit einer Vielzahl von optionalen Sensoren eingesetzt werden, aber auch an Bestandsmaschinen nachgerüstet werden, indem die Konfigurationsdaten es ermöglichen, je nach Art und Anzahl der verfügbaren Sensoren und steuerungsabhängiger Auslesemöglichkeiten die Auslesefunktion und Weiterverarbeitungsfunktion der Datenspeichereinheit individuell an die jeweilige Maschine und deren Steuerung bzw. an den Bedarf anpassend zu konfigurieren, und dennoch die Sensorikdaten maschinen- und steuerungsunabhängig über eine universelle Schnittstelle (z.B. OPC-Schnittstelle, oder insbesondere OPC UA Schnittstelle, oder auch eine MQTT-Schnittstelle) an weitere Datenverarbeitungseinrichtungen zu übertragen.

Die Konfigurationsdaten können z.B. in einer Konfigurationsdatei in einem universellen Datenformat in einer Markup-Sprache (z.B. als XML-Datei) hinterlegt werden.

Die Konfigurationsdaten können für Zertifizierungszwecke zudem die Sensorsignalkanäle angeben, die der Zertifizierung zugeführt werden müssen, d.h. welche Sensorsignale bzw. welche Ereignisse im Zusammenhang mit welchen Sensorsignalen in Zertifizierungsdaten zu speichern sind.

Gemäß einem bevorzugten Aspekt kann die zweite Schnittstelleneinheit dazu eingerichtet sein, in dem zweiten Speichermedium gespeicherte Sensorikdaten über ein lokales oder globales Netzwerk an einen Server zu übertragen. Dies hat den Vorteil, dass Sensorikdaten und/oder Zertifizierungsdaten zentral bei größerem Datenvolumen und über längeren Zeitraum auf einem lokalen oder globalen Server (z.B. auch in einer Cloud-Anwendung) gespeichert und zur Analyse bereitgestellt werden können.

Zudem bietet dies den Vorteil, dass auf dem Server Sensorikdaten und/oder Zertifizierungsdaten über das lokale oder globale Netzwerk von mehreren Werkzeugmaschinen auch von sehr unterschiedlichen Standorten auf einfache und universelle Weise zentral gespeichert werden können, so z.B. auch um Fernwartungsdiagnosen zu ermöglichen oder vorteilhaft Vergleichsanalysen der Sensorikdaten und/oder Zertifizierungsdaten unterschiedlicher Werkzeugmaschinen oder auch gleicher, unter unterschiedlichen Bedingungen und an unterschiedlichen Standorten eingesetzten Werkzeugmaschinen.

Gemäß einem bevorzugten Aspekt kann die Datenverarbeitungseinheit dazu eingerichtet sein, die in dem zweiten Speichermedium gespeicherten Sensorikdaten zur Datenübertragung an den Server zu komprimieren und/oder zu verschlüsseln. Dies hat den Vorteil, dass eine Datensicherheit bei Übertragung als auch eine Vermeidung von unberechtigtem Zugriff ermöglicht wird, als auch eine effiziente Datenspeicherung komprimierter Daten für Langzeitspeicherung auf dem Server.

Gemäß einem bevorzugten Aspekt kann die die zweite Schnittstelleneinheit dazu eingerichtet sein, in dem zweiten Speichermedium gespeicherte und über einen vorbestimmten Zeitraum gesammelte Sensorikdaten wiederholt regelmäßig über das lokale oder globale Netzwerk an den Server zu übertragen. In der Zwischenzeit können die Daten puffernd an der Datenspeichereinrichtung gespeichert werden (auch aus Sicherheitsgründen, um Datenverlust bei Netzwerkproblemen zu vermeiden) und zudem ermöglicht dies die einfache und kontrollierte, ggf. automatische Übertragung von Daten in Paketen z.B. zu vorbestimmten Zeitintervallen oder Datenvolumina und ggf. zu vorbestimmten Zeitpunkten.

Gemäß einem bevorzugten Aspekt können die an den Server übertragenen Sensorikdaten zudem einen Maschinentyp der Werkzeugmaschine, eine Maschinenkonfiguration der Werkzeugmaschine und/oder Maschinenidentifikationsdaten, die insbesondere eine Maschinennummer umfassen, der Werkzeugmaschine angeben. Dies hat den Vorteil, dass ein Vergleich und eine Identifikation der Werkzeugmaschine bzw. der Arbeitsbedingungen der Werkzeugmaschine oder des Maschinentyps vereinfacht ist, insbesondere bei analysierendem Vergleich der Daten unterschiedlicher Maschinen.

Gemäß einem bevorzugten Aspekt kann die zweite Schnittstelleneinheit eine Webschnittstelle und/oder eine Webservice-Applikation umfassen, über die der externen Datenverarbeitungseinrichtung bevorzugt mittels eines Webbrowsers und/oder einer Web-Applikation Zugriff auf in dem zweiten Speichermedium gespeicherte, aggregierte Sensorikdaten gewährbar ist. Dies hat den Vorteil, dass Anzeige und Analyse der Daten einfach und effizient über Webschnittstellen und Webbrowser-Zugriff ermöglicht ist, so dass auch eine Vielzahl von externen Datenverarbeitungseinrichtungen (z.B. Computer, Notebooks, Tablets, Smartphones) einfach und universell mittels einer Web-Applikation und/oder über einen Link mittels eines Webbrowsers auf die Daten zugreifen können, diese anzeigen und/oder analysieren können.

Gemäß einem bevorzugten Aspekt können die Konfigurationsdaten weiterhin ein Datenformat angeben, und die Datenverarbeitungseinheit kann die aggregierten Sensorikdaten bevorzugt in dem in den Konfigurationsdaten angegebenen Datenformat in dem zweiten Speichermedium speichern. Dies hat den Vorteil, dass ein universelles aber auch universell konfigurierbares Datenformat ermöglicht wird, auch bei unterschiedlichen Maschinen- und Steuerungskonfigurationen bzw. Sensorverfügbarkeiten, so dass maschinenunabhängig und steuerungsunabhängig Sensorikdaten für den universellen Zugriff durch eine Vielzahl von unterschiedlichen externen Datenverarbeitungseinrichtungen in einem universellen Datenformat bereitgestellt werden können.

Gemäß einem bevorzugten Aspekt kann die zweite Schnittstelleneinheit mit einer Mensch-Maschine-Schnittstelle der Steuereinrichtung der Werkzeugmaschine verbindbar sein, bevorzugt zum Übertragen von in dem zweiten Speichermedium gespeicherten Sensorikdaten zu der Mensch-Maschine-Schnittstelle, bevorzugt zur Anzeige auf einer graphischen Benutzeroberfläche der Mensch-Maschine-Schnittstelle der Steuereinrichtung der Werkzeugmaschine. Dies hat den Vorteil, dass die Sensorikdaten auch an einer Mensch-Maschine-Schnittstelle der Steuerung angezeigt, ausgelesen, analysiert bzw. eingesehen werden können, so dass einem Bediener direkt an der Werkzeugmaschine ermöglicht ist, auf Basis der Anzeige und/oder Analyse der Sensorik- und/oder Zertifizierungsdaten

Gemäß einem bevorzugten Aspekt kann das zweite Speichermedium einen Ringpuffer umfassen, und die Sensorikdaten können bevorzugt in dem Ringpuffer gespeichert werden. Dies hat den Vorteil, dass nach einem vorbestimmten Datenvolumen, insbesondere nach Übertragung der Daten an eine externe Datenverarbeitungseinrichtung, Datenspeicher für neu gesammelte Daten zur Verfügung steht. Bevorzugt ist das im Ringpuffer zur Verfügung zu stellende Datenspeichervolumen konfigurierbar, z.B. über die Konfigurationsdaten.

Gemäß einem bevorzugten Aspekt kann die Datenverarbeitungseinheit weiterhin dazu eingerichtet sein, Sensorikdaten zusammen mit einem entsprechenden Zeitstempel in dem zweiten Speichermedium zu speichern. Dies hat den Vorteil, dass eine Analyse ermöglicht wird und eine Datenhistorie aufzeichenbar ist.

Gemäß einem bevorzugten Aspekt können die Ausleseregeln der Konfigurationsdaten für ein, mehrere oder alle Sensorsignale der in den Konfigurationsdaten angegebenen Gruppe von Sensoren der Werkzeugmaschine eine individuelle Auslesefrequenz angeben. Bevorzugt ist die Ausleseeinheit dann dazu eingerichtet, für ein entsprechendes Sensorsignal Sensorsignalwerte mit der entsprechenden in den Konfigurationsdaten angegebenen individuellen Auslesefrequenz auszulesen. Dies hat den Vorteil, dass jeweils individuelle Sensorsignalausleseraten je nach Bedarf konfiguriert werden können.

Gemäß einem bevorzugten Aspekt kann zumindest eine in den Konfigurationsdaten angegebene individuelle Auslesefrequenz kleiner sein, als eine Sensorwertspeicherfrequenz einer speicherprogrammierbaren Steuerung und/oder als eine Sensorwertspeicherfrequenz einer NC-Steuerung der Steuereinrichtung. Dies ermöglicht vorteilhaft eine steuerungsunabhängigere universelle Auslesecharakteristik.

Gemäß einem bevorzugten Aspekt können die Verarbeitungsregeln der Konfigurationsdaten für ein, mehrere oder alle Sensorsignale der in den Konfigurationsdaten angegebenen Gruppe von Sensoren der Werkzeugmaschine eine individuelle Verarbeitungsregel angeben. Bevorzugt kann dann die Datenverarbeitungseinheit dazu eingerichtet sein, für ein entsprechendes Sensorsignal aus einer Mehrzahl von über einen in der individuellen Verarbeitungsregel vorgegebenen Zeitraum ausgelesenen Sensorsignalwerten anhand der entsprechenden in den Konfigurationsdaten angegebenen individuellen Verarbeitungsregel einen einzelnen Sensorikwert zu berechnen und in dem zweiten Speichermedium zu speichern. Dies hat den Vorteil, dass Verarbeitungsregeln je nach Bedarf aber auch zur Reduzierung des zu speichernden Datenvolumens konfiguriert werden können, z.B. durch Aggregation mehrerer Signalwerte eines Sensors zu einem zu speichernden Signalwert.

Gemäß einem bevorzugten Aspekt kann eine individuelle Verarbeitungsregel angeben, dass der Sensorikwert als Mittelwert der Mehrzahl von über einen in der individuellen Verarbeitungsregel vorgegebenen Zeitraum ausgelesenen Sensorsignalwerten zu berechnen ist, und/oder eine individuelle Verarbeitungsregel kann angeben, dass der Sensorikwert als Maximalwert oder Minimalwert der Mehrzahl von über einen in der individuellen Verarbeitungsregel vorgegebenen Zeitraum ausgelesenen Sensorsignalwerten zu berechnen ist.

Gemäß einem bevorzugten Aspekt können die Verarbeitungsregeln der Konfigurationsdaten für zumindest zwei Sensorsignale der in den Konfigurationsdaten angegebenen Gruppe von Sensoren der Werkzeugmaschine eine Kombinationsregel angeben. Die Datenverarbeitungseinheit kann dann dazu eingerichtet sein, für Sensorwerte der zumindest zwei Sensorsignale auf Grundlage der Kombinationsregel einen kombinierten Sensorikwert zu berechnen und in dem zweiten Speichermedium zu speichern. Dies hat den Vorteil, dass Verarbeitungsregeln je nach Bedarf aber auch zur Reduzierung des zu speichernden Datenvolumens konfiguriert werden können, z.B. durch Kombination mehrerer Signalwerte mehrerer Sensoren zu einem zu speichernden Signalwert (z.B. betreffend mehrere eine gleiche Maschinenkomponente betreffende Sensorsignale).

Gemäß einem bevorzugten Aspekt können die Konfigurationsdaten für ein, mehrere oder alle Sensorsignale der in den Konfigurationsdaten angegebenen Gruppe von Sensoren der Werkzeugmaschine Zertifizierungsregeln umfassen. Die Datenverarbeitungseinheit kann zudem dazu eingerichtet sein, auf Grundlage der in den Konfigurationsdaten angegebenen Zertifizierungsregeln und auf Basis der entsprechenden ausgelesenen Sensorsignale Zertifizierungsdaten zu erzeugen und die erzeugten Zertifizierungsdaten in dem zweiten Speichermedium zu speichern. Bevorzugt kann über die zweite Schnittstelleneinheit der externen Datenverarbeitungseinrichtung Zugriff auf in dem zweiten Speichermedium gespeicherte Zertifizierungsdaten gewährbar sein. Dies hat den Vorteil, dass Sensorikdatenspeicherung mit einer etwaigen erforderlichen Zertifizierung der Prozesse auf einfache Weise und effizient kombiniert werden kann. Die Zertifizierung muss somit nicht nachträglich auf Basis der gespeicherten Sensorikdaten erfolgen.

Gemäß einem bevorzugten Aspekt können die Zertifizierungsdaten angeben, zu welchem Zeitpunkt und/oder an welcher Position eines an der Steuereinrichtung der Werkzeugmaschine ausgeführten NC-Programms eines oder mehrere der in den Zertifizierungsregeln angegebenen Sensorsignale einen entsprechenden Grenzwert überschritten hat. Alternativ bzw. zusätzlich, z.B. wenn kein Grenzwert überschritten wurde, kann angegeben werden, dass keines der in den Zertifizierungsregeln angegebenen Sensorsignale während eines vorgegebenen Zeitraums oder während dem Ausführen des NC-Programms den entsprechenden Grenzwert überschritten hat.

Gemäß einem bevorzugten Aspekt kann die zweite Schnittstelleneinheit dazu eingerichtet sein, der externen Datenverarbeitungseinrichtung Zugriff auf in dem ersten Speichermedium gespeicherte Konfigurationsdaten zu gewähren, insbesondere bevorzugt zur Modifikation der Konfigurationsdaten. Dies hat den Vorteil, dass die Konfigurationsdaten je nach Bedarf konfigurierbar sind, z.B. wenn andere oder zusätzliche Auslese- oder Verarbeitungsregeln gesetzt werden sollen, oder auch wenn die Maschine mit Sensoren nachgerüstet wird oder die Steuerung erweitert wird.

Gemäß einem bevorzugten Aspekt können die Konfigurationsdaten für ein, mehrere oder alle Sensorsignale der in den Konfigurationsdaten angegebenen Gruppe von Sensoren der Werkzeugmaschine einen oder mehrere individuelle Grenzwerte angeben. Die Datenverarbeitungseinheit kann dazu eingerichtet sein, zu berechneten Sensorikwerten dazugehörige, in den Konfigurationsdaten angegebene Grenzwerte in dem zweiten Speichermedium zu speichern. Dies erleichtert die spätere Analyse der Daten, da dazugehörige Grenzwert jeweils mitgespeichert wird.

Gemäß einem bevorzugten Aspekt kann die Ausleseeinheit weiterhin dazu eingerichtet sein, über die erste Schnittstelleneinheit Zählerstandswerte aus Registern einer speicherprogrammierbaren Steuerung der Steuereinrichtung der Werkzeugmaschine auszulesen.

Gemäß einem bevorzugten Aspekt die Datenverarbeitungseinheit weiterhin dazu eingerichtet sein, ausgelesene Zählerstandswerte in dem zweiten Speichermedium zu speichern, insbesondere bevorzugt zusammen mit einem Zeitstempel.

Gemäß einem bevorzugten Aspekt kann die Ausleseeinheit einen Datenlogger umfassen.

Gemäß einem nebengeordneten Aspekt kann zudem ein System bereitgestellt werden, mit einer Datenspeichervorrichtung gemäß einem oder mehreren der vorstehenden Aspekte und mit einer externen Datenverarbeitungseinrichtung, die bevorzugt über ein lokales oder globales Netzwerk mit der zweiten Schnittstelleneinheit verbunden ist. Die externe Datenverarbeitungseinrichtung (z.B. ein Server) kann bevorzugt dazu eingerichtet sein, über die zweite Schnittstelleneinheit auf in dem zweiten Speichermedium gespeicherte Sensorikdaten und/oder auf in dem ersten Speichermedium gespeicherte Konfigurationsdaten zuzugreifen.

Weitere Aspekte und deren Vorteile als auch Vorteile und speziellere Ausführungsmöglichkeiten der vorstehend beschriebenen Aspekte und Merkmale werden aus den folgenden, jedoch in keinster Weise einschränkend aufzufassenden Beschreibungen und Erläuterungen zu den angehängten Figuren beschrieben.

### Kurzbeschreibung der Figuren

Fig. 1 zeigt eine beispielhafte schematische Darstellung eines Systems mit einer Datenspeichervorrichtung gemäß einem Ausführungsbeispiel der Erfindung,
Fig. 2 zeigt eine beispielhafte schematische Darstellung eines Systems gemäß einem weiteren Ausführungsbeispiel der Erfindung, und
Fig. 3 zeigt eine beispielhafte schematische Darstellung eines Systems gemäß einem weiteren Ausführungsbeispiel der Erfindung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keinster Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Hierbei wird erfindungsgemäß in Ausführungsbeispielen eine Datenspeichervorrichtung zum Einsatz an einer numerisch gesteuerten Werkzeugmaschine und in optionaler Verbindung zu externen Datenverarbeitungseinrichtungen (z.B. Server, Computer, PC, Notebook, Tablet und/oder Smartphone) bzw. in optionaler Verbindung zu externen Datennetzwerken (LAN, WAN, Intranet, und/oder Internet) vorgeschlagen, wobei die Werkzeugmaschine eine Steuereinrichtung (z.B. NC und/oder PLC) zum Steuern einer Mehrzahl von Aktoren der Werkzeugmaschine und eine Mehrzahl von Sensoren zur Ausgabe von einen Maschinenzustand der Werkzeugmaschine betreffenden Sensorsignalen an die Steuereinrichtung umfasst.

Dies ermöglicht ein verbessertes "Condition Monitoring" (Zustandsüberwachung), d.h. z.B. eine permanente und/oder regelmäßige Erfassung von Maschinenprozessdaten (z.B. von Temperaturen, Belastungen, Schwingungen) von entsprechenden Sensoren der Werkzeugmaschine zur Ermittlung des Maschinenzustandes (z.B. des momentanen Maschinenzustandes, eines durchschnittlichen Maschinenzustandes, eines Maschinenzustandes zu einem vorherigen Zeitpunkts oder in einem vorherigen Zeitraum, oder auch ein Maschinenzustand zu Spitzenbearbeitungszeiten im Grenzbereich).

Durch nachgelagerte Berechnungen und Analysen dieser ermittelten Daten lassen sich vorteilhaft Veränderungen der Gesamtmaschine oder einzelner Baugruppen ableiten um damit bspw. Serviceintervalle dynamisch anzupassen ("Predictive Maintenance"). Zusätzlich bieten die ermittelten Prozessdaten dem Bearbeiter, Bediener oder der die Werkzeugmaschine einsetzenden Firma die Möglichkeit durch mehr Transparenz die Bearbeitung von Werkstücken an der Werkzeugmaschine zu optimieren.

Hierbei können auch direkt automatisch Bestell- und/oder Liefervorgänge ausgelöst werden, wenn der Bedarf aufgrund der Datenauswertung (z.B. durch Ferndiagnose auf einem Auswertungsserver) festgestellt wird, dass eine Wartung bzw. ein Ersatzteileinbau bzw. Ersatzteilaustausch an einer bestimmten Werkzeugmaschine erforderlich ist. Zudem können bei bzw. nach dieser Feststellung, dass eine Wartung bzw. ein Ersatzteileinbau bzw. Ersatzteilaustausch an einer bestimmten Werkzeugmaschine erforderlich ist, Anleitungsdaten an die Mensch-Maschine-Schnittstelle der Werkzeugmaschine übermittelt werden, die angeben bzw. anleiten, wie die benötigte Wartung bzw. der benötigte Ersatzteileinbau bzw. Ersatzteilaustausch an der Werkzeugmaschine durchführbar ist. Diese Anleitungsdaten können Text-, Bild-, Audio- und/oder Videodaten umfassen, die einen oder mehrere Schritte der benötigten Wartung bzw. des benötigten Ersatzteileinbaus bzw. Ersatzteilaustauschs angeben, zeigen oder anleiten. Derartige Anleitungsdaten können z.B. über einen Monitor des Steuer- bzw. Bedienpults der Werkzeugmaschine ausgegeben werden bzw. ausgebbar sein.

Die vorstehenden Aspekte ermöglichen es einerseits vorteilhaft Maschinenzustände darzustellen bzw. anzuzeigen als auch eine Historie von Sensorsignalen bzw. Sensorikdaten an der Werkzeugmaschine als Funktion der Zeit (Zeitverlauf) darzustellen, zu plotten oder auszuwerten. Dies ermöglicht eine vorteilhafte effiziente Detektion von Problemstellen. Weiterhin können die gesammelten Sensorikdaten und weitere Informationen über einen zeitlichen Verlauf des Maschinenzustands vorteilhaft für Vorhersagen genutzt werden. So ist es zum Beispiel möglich, einen Verschleißgrad einzelner Komponenten und letztlich die zu erwartende Restlebensdauer anzuzeigen. Dies kann z.B. für reine Verbrauchsmittel (z.B. Schmiermitteltanks) anhand von Füllständen angedacht sein. Zudem können zusätzliche Sensorpakete (z.B. Qualitätssensoren oder spez. Sensoren für Condition Monitoring) angeboten werden, um die vorhandenen Sensordaten der Werkzeugmaschine um weitere Sensordaten aufzurüsten.

Hierbei wird erfindungsgemäß in Ausführungsbeispielen eine Datenspeichervorrichtung zum Einsatz an einer numerisch gesteuerten Werkzeugmaschine vorgeschlagen, an der eine Zustandsanzeige auf Basis der gesammelten Sensorikdaten, eine Plotterfunktion zum Anzeigen eines Zeitverlaufs einer oder mehrerer Sensorsignale, eine Prozessanalyse (z.B. Suche nach Ereignissen, wie z.B. Grenzwertüberschreitungen einzelner oder mehrerer Sensorsignale) auf Basis von über einen vorbestimmten Zeitraum gesammelten Sensorikdaten, eine historienbasierte Programmanalyse, und/oder Vorhersagen für Wartungs- oder Ersatzteilaustauschbedarf durchgeführt werden, z.B. auf Basis von füllstandsanzeigenbasierten und/oder zählerbasierten Restlebensdauervorhersagen für Komponenten und Teile der Werkzeugmaschinen sowie erforderliche Verbrauchsmittel (z.B. Filterwechsel, Kühlschmiermittelwechsel oder erforderliche Nachfüllaktionen für Verbrauchsmittel) auf Basis von automatisierten Analysen der gesammelten Sensorikdaten. Zudem kann automatisiert zusammen mit der Speicherung von Sensorikdaten auch eine NC-Programm-Zertifizierung bzw. Bearbeitungsprozesszertifizierung effizient durchgeführt werden, wie sie z.B. im Bereich Aerospace oder Automotive erwünscht bzw. nach Prozessmaßgaben erforderlich.

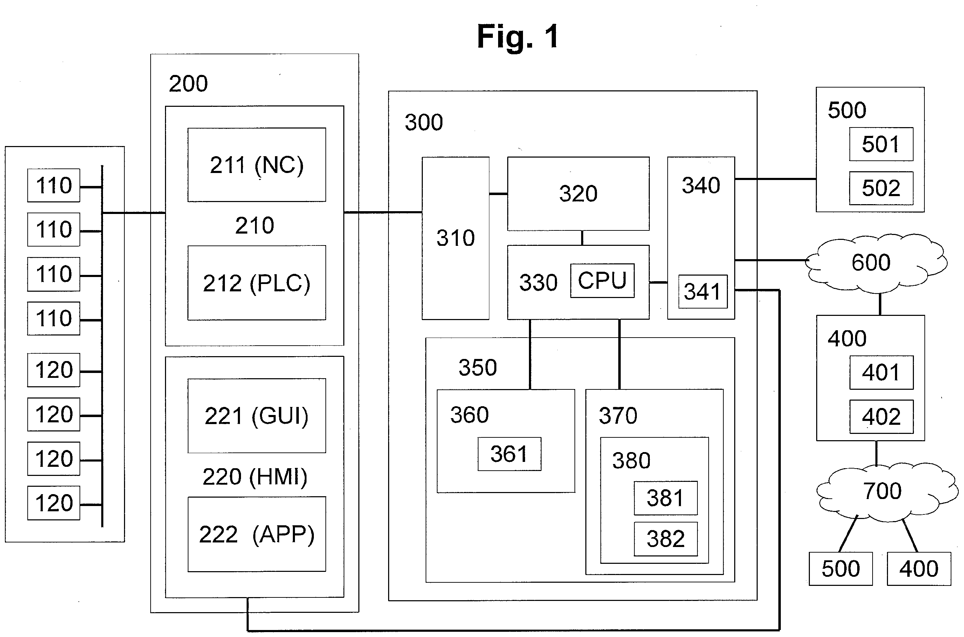

Fig. 1 zeigt eine beispielhafte schematische Darstellung eines Systems mit einer Datenspeichervorrichtung gemäß einem Ausführungsbeispiel der Erfindung.

Das System umfasst die Datenspeichervorrichtung 300, eine Werkzeugmaschine 100, eine Steuereinrichtung 200 der Werkzeugmaschine 100 und eine optionale externe Datenverarbeitungseinrichtung 400.

Die Werkzeugmaschine 100 umfasst beispielhaft eine Mehrzahl von durch die Steuereinrichtung 200 steuerbaren Aktoren 110 der Werkzeugmaschine 100 und eine Mehrzahl von Sensoren 120 zur Ausgabe von einen Maschinenzustand der Werkzeugmaschine 100 betreffenden Sensorsignalen an die Steuereinrichtung 200.

Die Aktoren 110 können z.B. Antriebe von steuerbaren Linear- und Rundachsen (Schwenk- und/oder Drehachsen) für eine gesteuerte Relativbewegung zwischen Werkzeug und Werkstück umfassen, und auch Antriebe von werkzeugtragenden Arbeitsspindeln (z.B. an Fräsmaschinen) bzw. werkstücktragenden Arbeitsspindeln (z.B. an Drehmaschinen). Des Weiteren können die Aktoren 110 elektronisch, hydraulisch und/oder pneumatisch gesteuerte Ventile, Pumpen oder andere Zuführeinrichtungen von interner oder externer Kühlschmierstoffzuführung bzw. Druckluftzuführungen sein. Fördereinrichtungen, Palettenwechsler, Werkstückwechlser, Werkzeugmagazine und anderes Werkzeugmaschinenzubehör kann zudem über Antriebe oder Schaltungen bzw. entsprechende Aktoren gesteuert werden.

Die Sensoren 120 können z.B. Sensoren sein, die jeweiligen Baugruppen oder Komponenten der Werkzeugmaschine zugeordnet sein können, z.B. den Achsen, den Antrieben, Achslagern, den Spindeln, Spindellagern, einem Werkzeugmagazin, einem Werkzeugwechsler, einem Paletten- oder Werkstückwechsler, einer internen oder externe Kühlschmiermittelzuführeinrichtung, einer Spänefördereinrichtung, und/oder einer Hydraulik- und/oder Pneumatik-Steuerung. Zu den einzelnen Baugruppen können z.B. eine Vielzahl von unterschiedlichen Sensoren bereitgestellt werden, so z.B. Positionsmesssensoren, Strom- und/oder Spannungsmesssensoren, Temperatursensoren, Kraftsensoren, Beschleunigungssensoren, Vibrationssensoren, Lagerdiagnosesensoren, Verlagerungssensoren, Füllstandsanzeigesensoren, Flüssigkeitssensoren (z.B. zum Messen von PH-Werten in Kühlschmiermittelflüssigkeiten, Wasseranteilmesssensoren für Öl, Kühlmittel etc.), Wassergehaltsensoren in Pneumatiksystemen, und/oder Filterzustandssensoren.

Die verfügbaren Sensoren an der Werkzeugmaschine und die Verfügbarkeit der Sensorwerte an der Steuerung kann hierbei maschinentypisch und/oder steuerungstypisch sehr unterschiedlich ausfallen.

Hierzu sieht die Erfindung beispielhaft vor, in Konfigurationsdaten zum Auslesen und Verarbeiten der Sensorikdaten modifizierbar festzulegen, welche Sensoren an der Werkzeugmaschine verfügbar sind bzw. ausgelesen werden sollen, und wie die jeweiligen Sensorwerte ausgelesen werden (z.B. durch Festlegen vorbestimmter individueller Ausleseraten) und/oder wie die ausgelesenen Sensorwerte verarbeitet und gespeichert (Verarbeitungsregeln) werden sollen.

Auf Basis der individuell konfigurierbaren Konfigurationsdaten kann die erfindungsgemäße Datenspeichereinheit vielseitig genutzt werden und an Maschinen mit umfangreichen Sensorpaket mit einer Vielzahl von optionalen Sensoren eingesetzt werden, aber auch an Bestandsmaschinen nachgerüstet werden, indem die Konfigurationsdaten es ermöglichen, je nach Art und Anzahl der verfügbaren Sensoren und steuerungsabhängiger Auslesemöglichkeiten die Auslesefunktion und Weiterverarbeitungsfunktion der Datenspeichereinheit individuell an die jeweilige Maschine und deren Steuerung bzw. an den Bedarf anpassend zu konfigurieren, und dennoch die Sensorikdaten maschinen- und steuerungsunabhängig über eine universelle Schnittstelle (z.B. OPC-Schnittstelle, oder insbesondere OPC UA Schnittstelle) an weitere Datenverarbeitungseinrichtungen zu übertragen.

Die Konfigurationsdaten könne z.B. in einer Konfigurationsdatei in einem universellen Datenformat in einer Markup-Sprache (z.B. als XML-Datei) hinterlegt werden.

Die Steuereinrichtung 200 umfasst beispielhaft eine Steuerung 210 mit einer NC-Steuerung 211 und einer speicherprogrammierbaren Steuerung 212 (auch SPS oder PLC für "Programmable Logic Control" genannt).

Weiterhin umfasst die Steuereinrichtung 200 beispielhaft eine Mensch-Maschine-Schnittstelle 220 (auch HMI für "Human-Machine-Interface" genannt), mit der es einem Bediener der Werkzeugmaschine 100 ermöglicht ist, die Werkzeugmaschine 100 zu steuern, zu überwachen und/oder zu bedienen. Die Mensch-Maschine-Schnittstelle 220 umfasst beispielhaft eine auf einem Monitor oder Touchscreen anzeigbare graphische Benutzeroberfläche 221 (auch GUI für "Graphical User Interface" genannt).

Die Datenspeichervorrichtung 300 umfasst beispielhaft eine erste Schnittstelleneinheit 310 (Steuerungsschnittstelle), eine Ausleseeinheit 320, eine beispielhaft prozessorgesteuerte Datenverarbeitungseinheit 330, eine zweite Schnittstelleneinheit 340 (Universalschnittstelle), sowie einen Datenspeicher 350 mit einem ersten Speichermedium 360 und einem zweiten Speichermedium 370.

Das erste Speichermedium 360 (z.B. ein Memory, RAM, eine Festplatte oder ein Flash-Speicher) speichert beispielhaft Konfigurationsdaten 361, die beispielhaft eine Gruppe von Sensoren 120 der Werkzeugmaschine 100 sowie Auslese- und Verarbeitungsregeln für Sensorsignale der Gruppe von Sensoren 120 der Werkzeugmaschine 100 angeben, und das zweite Speichermedium 370 (z.B. eine oder mehrere Festplatten und/oder Flash-Speicher) umfasst beispielhaft eine Datenbank 380 zum Speichern von Sensorikdaten 381 und Zertifizierungsdaten 382.

Die Ausleseeinheit 320 ist beispielhaft dazu eingerichtet, Sensorsignalwerte der Sensorsignale der in den Konfigurationsdaten angegebenen Gruppe von Sensoren 120 der Werkzeugmaschine 110 über die erste Schnittstelleneinheit 310 aus der Steuereinrichtung 210 (z.B. aus Registern der PLC 212) auszulesen, insbesondere beispielhaft auf Grundlage der der in den Konfigurationsdaten angegebenen Ausleseregeln.

Die Datenverarbeitungseinheit 330 ist beispielhaft dazu eingerichtet, die mittels der Ausleseeinheit ausgelesenen Sensorsignalwerte zu aggregierten Sensorikdaten zu verarbeiten, insbesondere beispielhaft auf Grundlage der in den Konfigurationsdaten angegebenen Verarbeitungsregeln, und die verarbeiteten, aggregierten Sensorikdaten 361 in dem zweite Speichermedium 380 der Datenbank 380 zu Speichern.

Die zweite Schnittstelleneinheit 340 ist beispielhaft zur Datenübertragung mit einer externen Datenverarbeitungseinrichtung eingerichtet, über die der externen Datenverarbeitungseinrichtung Zugriff auf in dem zweiten Speichermedium 370 gespeicherte Sensorikdaten 380 gewährbar ist.

Als Beispiel für derartige externe Datenverarbeitungseinrichtungen ist in Fig. 1 beispielhaft gezeigt, dass die zweite Schnittstelleneinheit 340 mit der Mensch-Maschine-Schnittstelle 220 der Steuereinrichtung 200 verbunden ist, derart, dass beispielhaft ein Bediener mittels einer Applikation 222 und der graphischen Benutzeroberfläche 221 der Mensch-Maschine-Schnittstelle 220 Sensorikdaten 381 angezeigt bekommen kann bzw. auf die Sensorikdaten 381 zugreifen kann, und/oder über die graphische Benutzeroberfläche 221 die Konfigurationsdaten 361 einsehen bzw. bei Bedarf modifizieren kann, z.B. um die Auslese- und/oder Verarbeitungsregeln zu verändern bzw. einzusehen. Auch kann die Gruppe der auszulesenden Sensoren 120 eingesehen bzw. verändert werden.

Als weiteres Beispiel derartige externe Datenverarbeitungseinrichtungen ist in Fig. 1 beispielhaft gezeigt, dass die zweite Schnittstelleneinheit 340 mit einer Computereinrichtung 500 (z.B. ein externer PC, ein Notebook, ein Smartphone oder ein Tablet) verbunden ist, die eine Applikation 502 und einen Webbrowser 501 umfasst, dass beispielhaft ein Bediener mittels der Applikation 502 (beispielhaft eine Web-Applikation) und/oder mittels des Webbrowsers 501 Sensorikdaten 381 angezeigt bekommen kann bzw. auf die Sensorikdaten 381 zugreifen kann, und/oder die Konfigurationsdaten 361 einsehen bzw. bei Bedarf modifizieren kann, z.B. um die Auslese- und/oder Verarbeitungsregeln zu verändern bzw. einzusehen. Auch kann die Gruppe der auszulesenden Sensoren 120 eingesehen bzw. verändert werden. Hierzu umfasst die erste Schnittstelleneinheit beispielhaft eine der Applikation 502 entsprechende Web-Service-Applikation 341 (die als Service-Applikation bzw. Server-Applikation den Web-Applikationen Zugang gewähren kann, z.B. den Applikationen 222 und/oder 502).

Als weiteres Beispiel derartige externe Datenverarbeitungseinrichtungen ist in Fig. 1 beispielhaft gezeigt, dass die zweite Schnittstelleneinheit 340 über ein lokales oder globales Netzwerk 600 mit einem Server 400 umfassend eine Web-Service-Applikation 401 (z.B. analog zu der Web-Service-Applikation 341) verbunden ist. Der Server 400 kann über die Schnittstelleneinheit 340 Sensorikdaten 381 und auch Zertifizierungsdaten 382 laden bzw. übertragen bekommen und lokal auf dem Server 400 in einem Speichermedium 402 (z.B. Festplatten, Flash-Speicher, Cloud-Speicher, externe Storage-Arrays, etc.) speichern (z.B. in größeren Datenmengen, wenn das Speichermedium 370 zum Speichern der Sensorikdaten 381 einen Ringpuffer umfasst, und/oder auch zum Speichern von Sensorikdaten 381 von mehreren Werkzeugmaschinen 100, deren Steuerungen 210 jeweils mit einer entsprechenden Datenspeichereinrichtung 300 verbunden ist).

Über ein weiteres lokales oder globales Netzwerk 700 (z.B. ein LAN, WAN, ein Intranet oder das Internet) kann an den Server 400 ein weiterer Server 400 und/oder eine weitere Computereinrichtung 500 verbunden sein.

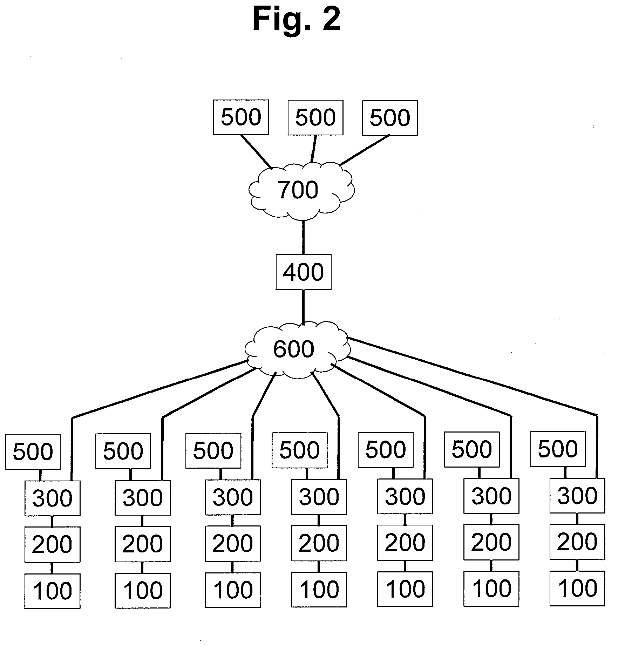

Fig. 2 zeigt eine beispielhafte schematische Darstellung eines Systems gemäß einem weiteren Ausführungsbeispiel der Erfindung.

In Fig. 2 ist beispielhaft eine Mehrzahl von Werkzeugmaschinen 100 mit jeweiligen Steuerungseinrichtungen 200 gezeigt, die zudem jeweils analog zu Fig. 1 an eine Datenspeichereinrichtung 300 angeschlossen sind. An die Datenspeichereinrichtung 300 sind beispielhaft jeweilige externe Datenverarbeitungseinrichtungen 500 (z.B. Steuerungs-PC, Mini-PC, PC, Notebook, Tablet, Smartphone) analog zu Fig. 1 angeschlossen.

Zudem sind beispielhaft alle Datenspeichereinrichtungen 300 über ein Netzwerk 600 (z.B. ein LAN, WAN, WLAN oder Intranet) mit einem Server 400 verbunden, um in den jeweiligen Datenspeichereinrichtungen 300 an den Steuerungen 200 der jeweiligen Werkzeugmaschinen 100 ausgelesene, weiterverarbeitete und gespeicherte bzw. zwischengespeicherte Sensorikdaten 381 (und/oder Zertifizierungsdaten 382) wiederholt, regelmäßig oder auf Anfrage (Request) an den Server 400 zu übertragen.

Der Server 400 kann somit von mehreren Werkzeugmaschinen 100 gesammelte Sensorikdaten 381 zentral auf einem Server 400 speichern. Über ein weiteres Netzwerk 700 (z.B. ein LAN, WAN, WLAN, Intranet oder das Internet, oder alternativ über das gleiche Netzwerk 600) können weitere Datenverarbeitungseinrichtungen 500 auf die an dem Server 400 gesammelten und gespeicherten Daten bzw. Sensorikdaten 381 und/oder Zertifizierungsdaten 382 zugreifen, um diese anzuzeigen, zu analysieren oder etwaige Wartungs- bzw. Ersatzteilbedarfsvorhersagen zu generieren. Hierbei können auch Daten unterschiedlicher Werkzeugmaschinen 100 analysierend verglichen werden.

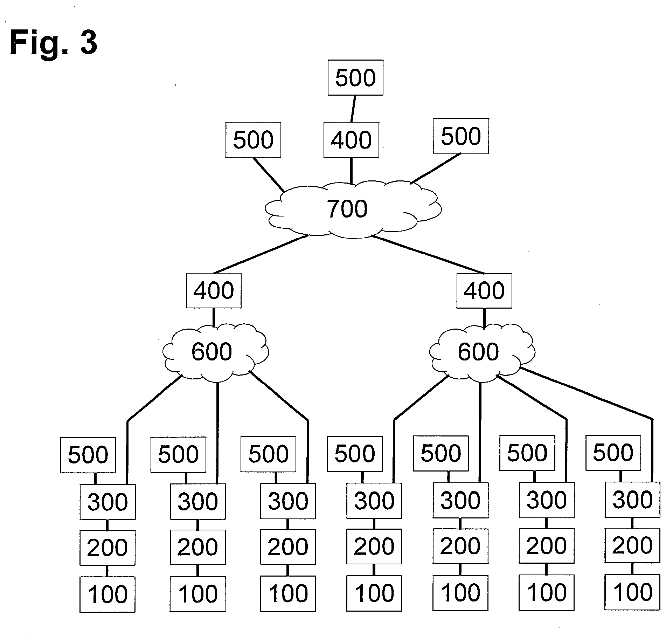

Fig. 3 zeigt eine beispielhafte schematische Darstellung eines Systems gemäß einem weiteren Ausführungsbeispiel der Erfindung.

In Fig. 3 ist beispielhaft eine erste Gruppe einer Mehrzahl von Werkzeugmaschinen 100 mit jeweiligen Steuerungseinrichtungen 200 gezeigt, die zudem jeweils analog zu Fig. 1 an eine Datenspeichereinrichtung 300 angeschlossen sind, und eine zweite Gruppe einer Mehrzahl von Werkzeugmaschinen 100 mit jeweiligen Steuerungseinrichtungen 200, die zudem jeweils analog zu Fig. 1 an eine Datenspeichereinrichtung 300 angeschlossen sind.

An die Datenspeichereinrichtungen 300 sind beispielhaft jeweilige externe Datenverarbeitungseinrichtungen 500 (z.B. Steuerungs-PC, Mini-PC, PC, Notebook, Tablet, Smartphone) analog zu Fig. 1 angeschlossen.

Zudem sind beispielhaft alle Datenspeichereinrichtungen 300 der ersten Gruppe über ein erstes Netzwerk 600 (z.B. ein LAN, WAN, WLAN oder Intranet) mit einem ersten Server 400 (erster Lokal-Server) verbunden, um in den jeweiligen Datenspeichereinrichtungen 300 an den Steuerungen 200 der jeweiligen Werkzeugmaschinen 100 ausgelesene, weiterverarbeitete und gespeicherte bzw. zwischengespeicherte Sensorikdaten 381 (und/oder Zertifizierungsdaten 382) wiederholt, regelmäßig oder auf Anfrage (Request) an den ersten Server 400 zu übertragen.

Der erste Server 400 kann somit von mehreren Werkzeugmaschinen 100 der ersten Gruppe gesammelte Sensorikdaten 381 lokal zentralisiert speichern. Über ein weiteres Netzwerk 700 (z.B. ein LAN, WAN, WLAN, Intranet oder das Internet, oder alternativ über das gleiche Netzwerk 600) können die Daten weiterhin an einen zweiten Server 400 (Zentralserver) übertragen werden und dort global zentralisiert gespeichert werden.

Zudem sind beispielhaft alle Datenspeichereinrichtungen 300 der zweiten Gruppe über ein zweites Netzwerk 600 (z.B. ein LAN, WAN, WLAN oder Intranet) mit einem dritten Server 400 (zweiter Lokal-Server) verbunden, um in den jeweiligen Datenspeichereinrichtungen 300 an den Steuerungen 200 der jeweiligen Werkzeugmaschinen 100 ausgelesene, weiterverarbeitete und gespeicherte bzw. zwischengespeicherte Sensorikdaten 381 (und/oder Zertifizierungsdaten 382) wiederholt, regelmäßig oder auf Anfrage (Request) an den dritten Server 400 (Zentral-Server) zu übertragen.

Der dritte Server 400 kann somit von mehreren Werkzeugmaschinen 100 der zweiten Gruppe gesammelte Sensorikdaten 381 lokal zentralisiert speichern. Über das weitere Netzwerk 700 (z.B. ein LAN, WAN, WLAN, Intranet oder das Internet, oder alternativ über das gleiche Netzwerk 600) können die Daten weiterhin an den zweiten Server 400 (Zentralserver) übertragen werden und dort global zentralisiert gespeichert werden.

Der zweite Server 400 kann somit alle Sensorikdaten bzw. Zertifizierungsdaten aller Werkzeugmaschinen der ersten und zweiten Gruppen speichern, und zur Anzeige bzw. Analyse, oder auch zum Vergleich bereitzustellen. Die ersten und zweiten Gruppen können z.B. Werkzeugmaschinengruppen sein, die in unterschiedlichen Werkshallen oder an unterschiedlichen Standorten bzw. bei unterschiedlichen Firmen aufgestellt sind.

Über das Netzwerk 700 können weitere Datenverarbeitungseinrichtungen 500 auf die an dem zweiten Server 400 gesammelten und gespeicherten Daten bzw. Sensorikdaten 381 und/oder Zertifizierungsdaten 382 zugreifen, um diese anzuzeigen, zu analysieren oder etwaige Wartungs- bzw. Ersatzteilbedarfsvorhersagen zu generieren. Hierbei können auch Daten unterschiedlicher Werkzeugmaschinen 100 analysierend verglichen werden.

Wenn über die gesammelten Daten an dem Server 400 (bevorzugt am Zentral-Server 400) und/oder der Datenverarbeitungseinrichtung 500 festgestellt oder vorhergesagt wird, dass an einer Werkzeugmaschine 100 eine Wartung durchzuführen ist, ein Ersatzteil eingebaut werden muss oder Bauteile bzw. Bearbeitungsmittel ausgetauscht werden müssen, kann in Ausführungsbeispielen ein automatischer Bestellvorgang auslösbar sein, so dass benötigte Wartungsgegenstände und/oder Ersatzteile zum Ort der jeweiligen Werkzeugmaschine 100 geliefert werden bzw. automatisch der entsprechende Liefervorgang ausgelöst wird.

Wenn über die gesammelten Daten an dem Server 400 oder der Datenverarbeitungseinrichtung 500 festgestellt oder vorhergesagt wird, dass an einer Werkzeugmaschine 100 eine Wartung durchzuführen ist, ein Ersatzteil eingebaut werden muss oder Bauteile bzw. Bearbeitungsmittel ausgetauscht werden müssen, kann in Ausführungsbeispielen über die jeweiligen Netzwerke an die Werkzeugmaschine 100 bzw. an deren verbundene Mensch-Maschine-Schnittstelle 220 Anleitungsdaten übermittelt werden, die über die graphische Benutzeroberfläche 221 angezeigt werden können und angeben, wie die benötigte Wartung und/oder der benötigte Ersatzteileinbau bzw. die benötigte Ersatzteilauswechslung an der Werkzeugmaschine 100 durchführbar ist.

Die Anleitungsdaten können Textdaten und/oder Bilddaten umfassen, die eine Anleitung für einen oder mehrere Schritte zur Wartung und/oder zum Ersatzteileinbau bzw. zur Ersatzteilauswechslung an der Werkzeugmaschine 100 angeben. Die Anleitungsdaten können auch Audio- und/oder Videodaten umfassen, die einen oder mehrere Schritte zur Wartung und/oder zum Ersatzteileinbau bzw. zur Ersatzteilauswechslung an der Werkzeugmaschine 100 beschreiben und/oder zeigen.

Dies hat den Vorteil, dass Wartungspersonal direkt an der Werkzeugmaschine bzw. deren Mensch-Maschine-Schnittstelle durch Text-, Bild-, Audio- und/oder Videodaten angeleitet werden kann, die benötigte Wartung und/oder der benötigte Ersatzteileinbau bzw. die benötigte Ersatzteilauswechslung an der Werkzeugmaschine 100 durchzuführen.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindung jedoch in keinster Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

Zusammenfassend wird eine Datenspeichervorrichtung zum Einsatz an einer numerisch gesteuerten Werkzeugmaschine bzw. Ausführungsbeispiele einer Datenspeichervorrichtung bereitgestellt, die eine einfachere, übersichtlichere, einfach weiter zu verwertende Speicherung von Sensorikdaten einer numerisch gesteuerten Werkzeugmaschine ermöglicht, und die zudem die Datenverarbeitungsauslastung der Steuerung der Werkzeugmaschine bei Auslesen der Sensorwerte zu reduzieren vermag und weiterhin die Menge der zu speichernden Daten bei Beibehaltung einer hohen Aussagekraft zu reduzieren vermag, und die zudem bevorzugt unabhängig von Werkzeugmaschinentyp und/oder Steuerungstyp universell einsetzbar ist.

## Patentansprüche

1. Datenspeichervorrichtung (300) für eine numerisch gesteuerte Werkzeugmaschine (100) mit einer Steuereinrichtung (200) zum Steuern einer Mehrzahl von Aktoren (110) der Werkzeugmaschine (100) und einer Mehrzahl von Sensoren (120) zur Ausgabe von einen Maschinenzustand der Werkzeugmaschine (100) betreffenden Sensorsignalen an die Steuereinrichtung (200), wobei die Datenspeichervorrichtung (300) umfasst:
eine erste Schnittstelleneinheit (310) zur Datenübertragung mit der numerischen Steuereinrichtung (200) der Werkzeugmaschine (100),
ein erstes Speichermedium (360) zum Speichern von Konfigurationsdaten (361), die eine Gruppe von Sensoren der Werkzeugmaschine (100) sowie Auslese- und Verarbeitungsregeln für Sensorsignale der Gruppe von Sensoren der Werkzeugmaschine (100) angeben,
eine Ausleseeinheit (320) zum Auslesen von Sensorsignalwerten der Sensorsignale der in den Konfigurationsdaten (361) angegebenen Gruppe von Sensoren der Werkzeugmaschine (100) über die erste Schnittstelleneinheit (310) auf Grundlage der in den Konfigurationsdaten (361) angegebenen Ausleseregeln,
eine Datenverarbeitungseinheit (330) zur Verarbeitung der mittels der Ausleseeinheit (320) ausgelesenen Sensorsignalwerte zu aggregierten Sensorikdaten (381) auf Grundlage der in den Konfigurationsdaten (361) angegebenen Verarbeitungsregeln,
ein zweites Speichermedium (370) zum Speichern der von der Datenverarbeitungseinheit (330) verarbeiteten, aggregierten Sensorikdaten (381), und
eine zweite Schnittstelleneinheit (340) zur Datenübertragung mit einer externen Datenverarbeitungseinrichtung (220; 400; 500), über die der externen Datenverarbeitungseinrichtung (220; 400; 500) Zugriff auf in dem zweiten Speichermedium (370) gespeicherte Sensorikdaten (381) gewährt wird, wobei
die zweite Schnittstelleneinheit (340) dazu eingerichtet ist, in dem zweiten Speichermedium (370) gespeicherte Sensorikdaten (381) über ein lokales oder globales Netzwerk (600) an einen Server (400) zu übertragen;
die zweite Schnittstelleneinheit (340) dazu eingerichtet ist, der externen Datenverarbeitungseinrichtung (220; 500) oder dem Server (400) Zugriff auf in dem ersten Speichermedium (360) gespeicherte Konfigurationsdaten (361) zu gewähren, zur Modifikation der Konfigurationsdaten (361);
die zweite Schnittstelleneinheit (340) mit einer Mensch-Maschine-Schnittstelle (220) der Steuereinrichtung (200) der Werkzeugmaschine (100) verbunden ist, zum Übertragen der im zweiten Speichermedium (370) gespeicherten Sensorikdaten (381) und/oder der im ersten Speichermedium (360) gespeicherten Konfigurationsdaten (361) zu der Mensch-Maschine-Schnittstelle (220) zur Anzeige auf einer graphischen Benutzeroberfläche (221) der Mensch-Maschine-Schnittstelle (220) der Steuereinrichtung (200) der Werkzeugmaschine (100),
wenn die externe Datenverarbeitungseinrichtung (220; 500) oder der Server (400) anhand der Sensorikdaten (381) und/oder der Konfigurationsdaten (361) feststellt oder vorhersagt, dass an der Werkzeugmaschine (100) eine Wartung durchzuführen ist, Anleitungsdaten an die Mensch-Maschine-Schnittstelle (220) übermittelt und über die graphische Benutzeroberfläche (221) angezeigt werden.

2. Datenspeichervorrichtung (300) gemäß Anspruch 1, **dadurch gekennzeichnet, dass** die Datenverarbeitungseinheit (330) dazu eingerichtet ist, die in dem zweiten Speichermedium (370) gespeicherten Sensorikdaten (381) zur Datenübertragung an den Server (400) zu komprimieren und/oder zu verschlüsseln.

3. Datenspeichervorrichtung (300) gemäß einem der vorstehenden Ansprüche, **dadurch gekennzeichnet, dass** die zweite Schnittstelleneinheit (340) eine Webschnittstelle und/oder eine Webservice-Applikation umfasst, über die der externen Datenverarbeitungseinrichtung mittels eines Webbrowsers und/oder einer Web-Applikation Zugriff auf in dem zweiten Speichermedium (370) gespeicherte, aggregierte Sensorikdaten (381) gewährbar ist.

4. Datenspeichervorrichtung (300) gemäß einem der vorstehenden Ansprüche, **dadurch gekennzeichnet, dass** die Konfigurationsdaten (361) weiterhin ein Datenformat angeben, und die Datenverarbeitungseinheit (330) dazu eingerichtet ist, die aggregierten Sensorikdaten (381) in dem in den Konfigurationsdaten (361) angegebenen Datenformat in dem zweiten Speichermedium (370) zu speichern.

5. Datenspeichervorrichtung (300) gemäß einem der vorstehenden Ansprüche, **dadurch gekennzeichnet, dass** das zweite Speichermedium (370) einen Ringpuffer umfasst und die Sensorikdaten (381) in dem Ringpuffer gespeichert werden.

6. Datenspeichervorrichtung (300) gemäß einem der vorstehenden Ansprüche, **dadurch gekennzeichnet, dass**
die Ausleseregeln der Konfigurationsdaten (361) für ein, mehrere oder alle Sensorsignale der in den Konfigurationsdaten (361) angegebenen Gruppe von Sensoren (120) der Werkzeugmaschine (100) eine individuelle Auslesefrequenz angeben, und
die Ausleseeinheit (310) dazu eingerichtet ist, für ein entsprechendes Sensorsignal Sensorsignalwerte mit der entsprechenden in den Konfigurationsdaten (361) angegebenen individuellen Auslesefrequenz auszulesen,
wobei insbesondere zumindest eine in den Konfigurationsdaten (361) angegebene individuelle Auslesefrequenz kleiner ist, als eine Sensorwertspeicherfrequenz einer speicherprogrammierbaren Steuerung (212) und/oder als eine Sensorwertspeicherfrequenz einer NC-Steuerung (211) der Steuereinrichtung (200) ist.

7. Datenspeichervorrichtung (300) gemäß einem der vorstehenden Ansprüche, **dadurch gekennzeichnet, dass**
die Verarbeitungsregeln der Konfigurationsdaten (361) für ein, mehrere oder alle Sensorsignale der in den Konfigurationsdaten (361) angegebenen Gruppe von Sensoren (120) der Werkzeugmaschine (100) eine individuelle Verarbeitungsregel angeben, und
die Datenverarbeitungseinheit (330) dazu eingerichtet ist, für ein entsprechendes Sensorsignal aus einer Mehrzahl von über einen in der individuellen Verarbeitungsregel vorgegebenen Zeitraum ausgelesenen Sensorsignalwerten anhand der entsprechenden in den Konfigurationsdaten (361) angegebenen individuellen Verarbeitungsregel einen einzelnen Sensorikwert zu berechnen und in dem zweiten Speichermedium (370) zu speichern,
wobei insbesondere die individuelle Verarbeitungsregel angibt, dass der Sensorikwert als Mittelwert der Mehrzahl von über einen in der individuellen Verarbeitungsregel vorgegebenen Zeitraum ausgelesenen Sensorsignalwerten zu berechnen ist, oder die individuelle Verarbeitungsregel angibt, dass der Sensorikwert als Maximalwert oder Minimalwert der Mehrzahl von über einen in der individuellen Verarbeitungsregel vorgegebenen Zeitraum ausgelesenen Sensorsignalwerten zu berechnen ist.

8. Datenspeichervorrichtung (300) gemäß einem der vorstehenden Ansprüche, **dadurch gekennzeichnet, dass**
die Verarbeitungsregeln der Konfigurationsdaten (361) für zumindest zwei Sensorsignale der in den Konfigurationsdaten (361) angegebenen Gruppe von Sensoren (120) der Werkzeugmaschine (100) eine Kombinationsregel angeben, und
die Datenverarbeitungseinheit (330) dazu eingerichtet ist, für Sensorwerte der zumindest zwei Sensorsignale auf Grundlage der Kombinationsregel einen kombinierten Sensorikwert zu berechnen und in dem zweiten Speichermedium (370) zu speichern.

9. Datenspeichervorrichtung (300) gemäß einem der vorstehenden Ansprüche, **dadurch gekennzeichnet, dass**
die Konfigurationsdaten (361) für ein, mehrere oder alle Sensorsignale der in den Konfigurationsdaten angegebenen Gruppe von Sensoren (120) der Werkzeugmaschine Zertifizierungsregeln umfassen, und
die Datenverarbeitungseinheit (330) zudem dazu eingerichtet ist, auf Grundlage der in den Konfigurationsdaten (361) angegebenen Zertifizierungsregeln und auf Basis der entsprechenden ausgelesenen Sensorsignale Zertifizierungsdaten (382) zu erzeugen und die erzeugten Zertifizierungsdaten (382) in dem zweiten Speichermedium (370) zu speichern
wobei über die zweite Schnittstelleneinheit (340) der externen Datenverarbeitungseinrichtung (220; 400; 500) Zugriff auf in dem zweiten Speichermedium (370) gespeicherte Zertifizierungsdaten (382) gewährbar ist.

10. Datenspeichervorrichtung (300) gemäß einem der vorstehenden Ansprüche, **dadurch gekennzeichnet, dass**
die Konfigurationsdaten (361) für ein, mehrere oder alle Sensorsignale der in den Konfigurationsdaten angegebenen Gruppe von Sensoren (120) der Werkzeugmaschine einen oder mehrere individuelle Grenzwerte angeben, und
die Datenverarbeitungseinheit (330) dazu eingerichtet ist, zu berechneten Sensorikwerten dazugehörige, in den Konfigurationsdaten angegebene Grenzwerte in dem zweiten Speichermedium zu speichern.

11. Datenspeichervorrichtung (300) gemäß einem der vorstehenden Ansprüche, **dadurch gekennzeichnet, dass**
die Ausleseeinheit (320) weiterhin dazu eingerichtet ist, über die erste Schnittstelleneinheit (310) Zählerstandswerte aus Registern einer speicherprogrammierbaren Steuerung der Steuereinrichtung der Werkzeugmaschine auszulesen, und
die Datenverarbeitungseinheit (330) weiterhin eingerichtet ist, ausgelesene Zählerstandswerte zusammen mit einem Zeitstempel in den Sensorikdaten (381) in dem zweiten Speichermedium (370) zu speichern.

12. System mit einer Datenspeichervorrichtung (300) gemäß einem der vorstehenden Ansprüche und einer externen Datenverarbeitungseinrichtung (220; 400; 500), die über ein lokales oder globales Netzwerk (600) mit der zweiten Schnittstelleneinheit (340) verbunden ist und dazu eingerichtet ist, über die zweite Schnittstelleneinheit (340) auf in dem zweiten Speichermedium (370) gespeicherte Sensorikdaten (381) und/oder auf in dem ersten Speichermedium (360) gespeicherte Konfigurationsdaten (361) zuzugreifen.

## Claims

1. A data storage apparatus (300) for a numerically controlled machine tool (100) comprising a control device (200) for controlling a plurality of actuators (110) of said machine tool (100) and a plurality of sensors (120) for outputting sensor signals indicating a machine status of said machine tool (100) to the control device (200), said data storage apparatus (300) comprising:
a first interface unit (310) for data transmission with the numerical control device (200) of said machine tool (100),
a first storage medium (360) for storing configuration data (361) indicating a group of sensors of said machine tool (100) and readout and processing rules for sensor signals of the group of sensors of said machine tool (100),
a readout unit (320) for reading out sensor signal values of the sensor signals of the group of sensors of said machine tool (100) indicated in the configuration data (361) via said first interface unit ( 310) on the basis of the readout rules indicated in the configuration data (361),
a data processing unit (330) for processing the sensor signal values read out by means of said readout unit (320) into aggregated sensory data (381) on the basis of the processing rules indicated in the configuration data (361),
a second storage medium (370) for storing the aggregated sensory data (381) processed by said data processing unit (330), and
a second interface unit (340) for data transmission with an external data processing device (220; 400; 500), via which said external data processing device (220; 400; 500) can access sensory data (381) stored in said second storage medium (370), wherein
said second interface unit (340) is configured to transmit sensory data (381) stored in said second storage medium (370) to a server (400) via a local or global network (600);
said second interface unit (340) is configured to grant said external data processing device (220; 500) or said server (400) access to configuration data (361) stored in said first storage medium (360) for modifying the configuration data (361);
said second interface unit (340) is connected to a man-machine interface (220) of the control device (200) of said machine tool (100) for transmitting the sensory data (381) stored in said second storage medium (370) and/or the configuration data (361) stored in said first storage medium (360) to said man-machine interface (220) for display on a graphical user interface (221) of said man-machine interface (220) of the control device (200) of said machine tool (100),
wherein, when said external data processing device (220; 500) or said server (400) determines or predicts based on the sensory data (381) and/or the configuration data (361) that maintenance is to be carried out on said machine tool (100), instructional data are transmitted to said man-machine interface (220) and displayed via said graphical user interface (221).

2. The data storage apparatus (300) according to claim 1, **characterized in that** said data processing unit (330) is configured to compress and/or encrypt the sensory data (381) stored in said second storage medium (370) for data transmission to said server (400).

3. The data storage apparatus (300) according to one of the preceding claims, **characterized in that** said second interface unit (340) comprises a web interface and/or a web service application via which said external data processing device can be granted access to aggregated sensory data (381) stored in said second storage medium (370) by means of a web browser and/or a web application.

4. The data storage apparatus (300) according to one of the preceding claims, **characterized in that** the configuration data (361) further indicate a data format and said data processing unit (330) is configured to store the aggregated sensory data (381) in said second storage medium (370) in the data format indicated in the configuration data (361).

5. The data storage apparatus (300) according to one of the preceding claims, **characterized in that** said second storage medium (370) comprises a ring buffer and the sensory data (381) are stored in the ring buffer.

6. The data storage apparatus (300) according to one of the preceding claims, **characterized in that**
the readout rules of the configuration data (361) for one, several or all sensor signals of the group of sensors (120) of said machine tool (100) indicated in the configuration data (361) indicate an individual readout frequency, and
said readout unit (310) is configured to read out sensor signal values for a corresponding sensor signal at the corresponding individual readout frequency indicated in the configuration data (361),
wherein, in particular, at least one individual readout frequency indicated in the configuration data (361) is smaller than a sensor value storage frequency of a programmable logic controller (212) and/or than a sensor value storage frequency of an NC control (211) of the control device (200).

7. The data storage apparatus (300) according to one of the preceding claims, **characterized in that**
the processing rules of the configuration data (361) indicate an individual processing rule for one, several or all sensor signals of the group of sensors (120) of said machine tool (100) indicated in the configuration data (361), and
said data processing unit (330) is configured to calculate a single sensory value for a corresponding sensor signal of a plurality of sensor signal values read out over a period of time indicated in the individual processing rule on the basis of the corresponding individual processing rule indicated in the configuration data (361) and to store it in said second storage medium (370),
wherein, in particular, the individual processing rule indicates that the sensory value is to be calculated as the mean value of the plurality of sensor signal values read out over a period of time indicated in the individual processing rule, or the individual processing rule indicates that the sensory value is to be calculated as the maximum value or minimum value of the plurality of sensor signal values read out over a period of time indicated in the individual processing rule.

8. The data storage apparatus (300) according to one of the preceding claims, **characterized in that**
the processing rules of the configuration data (361) indicate a combination rule for at least two sensor signals of the group of sensors (120) of said machine tool (100) indicated in the configuration data (361), and
said data processing unit (330) is configured to calculate a combined sensory value for sensor values of the at least two sensor signals on the basis of the combination rule and to store it in said second storage medium (370).

9. The data storage apparatus (300) according to one of the preceding claims, **characterized in that**
the configuration data (361) include certification rules for one, several or all sensor signals of the group of sensors (120) of said machine tool indicated in the configuration data, and
said data processing unit (330) is also indicated to generate certification data (382) on the basis of the certification rules specified in the configuration data (361) and on the basis of the corresponding read-out sensor signals and to store the generated certification data (382) in said second storage medium (370),
wherein access to certification data (382) stored in said second storage medium (370) can be granted via said second Interface unit (340) of said external data processing device (220; 400; 500).

10. The data storage apparatus (300) according to one of the preceding claims, **characterized in that**
the configuration data (361) indicate one or several individual limit values for one, several or all sensor signals of the group of sensors (120) of said machine tool indicated in the configuration data, and
said data processing unit (330) is configured to store limit values that are indicated in the configuration data and associated with calculated sensory values in said second storage medium.

11. The data storage apparatus (300) according to one of the preceding claims, **characterized in that**
said readout unit (320) is further configured to read out counter reading values from registers of a programmable logic controller of the control device of said machine tool via said first interface unit (310), and
said data processing unit (330 ) is further configured to store read-out counter reading values together with a time stamp in the sensory data (381) in said second storage medium (370).

12. A system comprising a data storage apparatus (300) according to one of the preceding claims and an external data processing device (220; 400; 500) which is connected to said second interface unit (340) via a local or global network (600) and is configured to access sensory data (381) stored in said second storage medium (370) and/or to access configuration data (361) stored in said first storage medium (360) via said second interface unit (340).

## Revendications

1. Dispositif de stockage de données (300) pour une machine-outil (100) à commande numérique, avec un système de commande (200) pour la commande d'une pluralité d'actionneurs (110) de la machine-outil (100) et une pluralité de capteurs (120) pour la délivrance de signaux de capteur concernant un état de machine de la machine-outil (100) au système de commande (200), dans lequel le dispositif de stockage de données (300) comprend :
une première unité d'interface (310) pour la transmission de données avec le système de commande (200) numérique de la machine-outil (100),
un premier support de stockage (360) pour le stockage de données de configuration (361), qui indiquent un groupe de capteurs de la machine-outil (100) ainsi que des règles de lecture et de traitement pour les signaux de capteur du groupe de capteurs de la machine-outil (100),
une unité de lecture (320) pour la lecture de valeurs de signaux de capteur des signaux de capteur du groupe de capteurs de la machine-outil (100) indiqué dans les données de configuration (361) par l'intermédiaire de la première unité d'interface (310) sur la base des règles de lecture indiquées dans les données de configuration (361),
une unité de traitement de données (330) pour le traitement des valeurs de signaux de capteur lues au moyen de l'unité de lecture (320) en données de détection (381) agrégées sur la base des règles de traitement indiquées dans les données de configuration (361),
un deuxième support de stockage (370) pour le stockage des données de détection (381) agrégées, traitées par l'unité de traitement de données (330), et
une deuxième unité d'interface (340) pour la transmission de données avec un système de traitement de données externe (220 ; 400 ; 500), par l'intermédiaire de laquelle l'accès aux données de détection (381) stockées dans le deuxième support de stockage (370) est accordé au système de traitement de données externe (220 ; 400 ; 500), dans lequel
la deuxième unité d'interface (340) est conçue pour transmettre les données de détection (381) stockées dans le deuxième support de stockage (370) à un serveur (400) par l'intermédiaire d'un réseau local ou mondial (600) ;
la deuxième unité d'interface (340) est conçue pour accorder au système de traitement de données externe (220 ; 500) ou au serveur (400) l'accès aux données de configuration (361) stockées dans le premier support de stockage (360), pour la modification des données de configuration (361) ;
la deuxième unité d'interface (340) est reliée à une interface homme-machine (220) du système de commande (200) de la machine-outil (100), pour la transmission des données de détection (381) stockées dans le deuxième support de stockage (370) et/ou des données de configuration (361) stockées dans le premier support de stockage (360) à l'interface homme-machine (220) pour être affichées sur une surface graphique de commande utilisateur (221) de l'interface homme-machine (220) du système de commande (200) de la machine-outil (100),
lorsque le système de traitement de données externe (220 ; 500) ou le serveur (400) détermine ou prédit sur la base des données de détection (381) et/ou des données de configuration (361) qu'une maintenance est à effectuer sur la machine-outil (100), des données d'instructions sont transmises à l'interface homme-machine (220) et affichées par l'intermédiaire de la surface graphique de commande utilisateur (221).

2. Dispositif de stockage de données (300) selon la revendication 1, **caractérisé en ce que** l'unité de traitement de données (330) est conçue pour compresser et/ou pour chiffrer les données de détection (381) stockées dans le deuxième support de stockage (370) pour la transmission de données au serveur (400).

3. Dispositif de stockage de données (300) selon l'une quelconque des revendications précédentes, **caractérisé en ce que** la deuxième unité d'interface (340) comprend une interface web et/ou une application de service web, par l'intermédiaire desquelles l'accès aux données de détection (381) agrégées, stockées dans le deuxième support de stockage (370), peut être accordé au système de traitement de données externe au moyen d'un navigateur web et/ou d'une application web.

4. Dispositif de stockage de données (300) selon l'une quelconque des revendications précédentes, **caractérisé en ce que** les données de configuration (361) indiquent en outre un format de données, et l'unité de traitement de données (330) est conçue pour stocker les données de détection (381) agrégées dans le format de données indiqué dans les données de configuration (361) dans le deuxième support de stockage (370).

5. Dispositif de stockage de données (300) selon l'une quelconque des revendications précédentes, **caractérisé en ce que** le deuxième support de stockage (370) comprend une mémoire tampon circulaire et les données de détection (381) sont stockées dans la mémoire tampon circulaire.

6. Dispositif de stockage de données (300) selon l'une quelconque des revendications précédentes, **caractérisé en ce que**
les règles de lecture des données de configuration (361) pour un, plusieurs ou tous les signaux de capteur du groupe de capteurs (120) de la machine-outil (100) indiqué dans les données de configuration (361) indiquent une fréquence de lecture individuelle, et
l'unité de lecture (320) est conçue, pour un signal de capteur correspondant, pour lire des valeurs de signaux de capteur avec la fréquence de lecture individuelle correspondante indiquée dans les données de configuration (361),
dans lequel en particulier au moins une fréquence de lecture individuelle indiquée dans les données de configuration (361) est inférieure à une fréquence de stockage de valeurs de capteur d'un automate programmable industriel (212) et/ou à une fréquence de stockage de valeurs de capteur d'une commande numérique (211) du système de commande (200).

7. Dispositif de stockage de données (300) selon l'une quelconque des revendications précédentes, **caractérisé en ce que**
les règles de traitement des données de configuration (361) pour un, plusieurs ou tous les signaux de capteur du groupe de capteurs (120) de la machine-outil (100) indiqué dans les données de configuration (361) indiquent une règle de traitement individuelle, et
l'unité de traitement de données (330) est conçue, pour un signal de capteur correspondant provenant d'une pluralité de valeurs de signaux de capteur lues pendant un laps de temps prédéfini dans la règle de traitement individuelle, pour calculer sur la base de la règle de traitement individuelle correspondante indiquée dans les données de configuration (361) une valeur de détection individuelle et pour la stocker dans le deuxième support de stockage (370),
dans lequel en particulier la règle de traitement individuelle indique que la valeur de détection est à calculer comme valeur moyenne de la pluralité de valeurs de signaux de capteur lues pendant un laps de temps prédéfini dans la règle de traitement individuelle, ou la règle de traitement individuelle indique que la valeur de détection est à calculer comme valeur maximale ou valeur minimale de la pluralité de valeurs de signaux de capteur lues pendant un laps de temps prédéfini dans la règle de traitement individuelle.

8. Dispositif de stockage de données (300) selon l'une quelconque des revendications précédentes, **caractérisé en ce que**
les règles de traitement des données de configuration (361) pour au moins deux signaux de capteur du groupe de capteurs (120) de la machine-outil (100) indiqué dans les données de configuration (361) indiquent une règle de combinaison, et
l'unité de traitement de données (330) est conçue, pour des valeurs de capteur des au moins deux signaux de capteur, pour calculer sur la base de la règle de combinaison une valeur de détection combinée et pour la stocker dans le deuxième support de stockage (370).

9. Dispositif de stockage de données (300) selon l'une quelconque des revendications précédentes, **caractérisé en ce que**
les données de configuration (361) pour un, plusieurs ou tous les signaux de capteur du groupe de capteurs (120) de la machine-outil indiqué dans les données de configuration comprennent des règles de certification, et
l'unité de traitement de données (330) est conçue en outre, sur la base des règles de certification indiquées dans les données de configuration (361) et sur la base des signaux de capteur lus correspondants, pour générer des données de certification (382) et pour stocker les données de certification (382) générées dans le deuxième support de stockage (370)
dans lequel l'accès aux données de certification (382) stockées dans le deuxième support de stockage (370) peut être accordé au système de traitement de données externe (220 ; 400 ; 500) par l'intermédiaire de la deuxième unité d'interface (340).

10. Dispositif de stockage de données (300) selon l'une quelconque des revendications précédentes, **caractérisé en ce que**
les données de configuration (361) pour un, plusieurs ou tous les signaux de capteur du groupe de capteurs (120) de la machine-outil indiqué dans les données de configuration indiquent une ou plusieurs valeurs limites individuelles, et
l'unité de traitement de données (330) est conçue pour stocker dans le deuxième support de stockage les valeurs limites indiquées dans les données de configuration, faisant partie des valeurs de détection à calculer.

11. Dispositif de stockage de données (300) selon l'une quelconque des revendications précédentes, **caractérisé en ce que**
l'unité de lecture (320) est conçue en outre pour lire par l'intermédiaire de la première unité d'interface (310) des valeurs de relevé de compteur provenant de registres d'un automate programmable industriel du système de commande de la machine-outil, et
l'unité de traitement de données (330) est conçue en outre pour stocker des valeurs de compteur lues conjointement avec une estampille temporelle dans les données de détection (381) dans le deuxième support de stockage (370).

12. Système avec un dispositif de stockage de données (300) selon l'une quelconque des revendications précédentes et un système de traitement de données externe (220 ; 400 ; 500), qui est relié à la deuxième unité d'interface (340) par l'intermédiaire d'un réseau local ou mondial (600) et est conçu pour avoir accès aux données de détection (381) stockées dans le deuxième support de stockage (370) et/ou aux données de configuration (361) stockées dans le premier support de stockage (360) par l'intermédiaire de la deuxième unité d'interface (340).
